# EUROPEAN PATENT SPECIFICATION

(11) **EP 4 068 425 B1**
(45) Date of publication and mention of the grant of the patent: **30.07.2025**
(21) Application number: 21869641.7
(22) Date of filing: 10.09.2021
(51) Int. Cl.: H01M 4/139, H01M 4/36, H01M 4/38, H01M 4/58, G01N 15/10, H01M 4/60, H01M 4/02, H01M 4/13, H01M 10/052, H01M 4/62, H01M 4/136

(54) **CATHODE SLURRY FOR LITHIUM-SULFUR BATTERY, CATHODE FOR LITHIUM-SULFUR BATTERY MANUFACTURED USING SAME, AND LITHIUM-SULFUR BATTERY COMPRISING SAME**
KATHODENAUFSCHLÄMMUNG FÜR LITHIUM-SCHWEFEL-BATTERIE, DAMIT HERGESTELLTE KATHODE FÜR LITHIUM-SCHWEFEL-BATTERIE UND LITHIUM-SCHWEFEL-BATTERIE DAMIT
BOUILLIE DE CATHODE POUR UNE BATTERIE AU LITHIUM-SOUFRE, CATHODE POUR UNE BATTERIE AU LITHIUM-SOUFRE FABRIQUÉE À L'AIDE DE CELLE-CI, ET BATTERIE AU LITHIUM-SOUFRE LA COMPRENANT

(30) Priority: 21.09.2020 KR 20200121526; 09.09.2021 KR 20210120228
(43) Date of publication of application: 05.10.2022
(73) Proprietor: LG Energy Solution, Ltd., Seoul 07335 (KR)
(72) Inventor: LEE, Mijin, Daejeon 34122 (KR); PARK, Eun Kyoung, Daejeon 34122 (KR); SHIN, Dongseok, Daejeon 34122 (KR); SOHN, Kwonnam, Daejeon 34122 (KR)
(74) Representative: Goddar, Heinz J.
(86) International application number: PCT/KR2021/012368
(87) International publication number: WO 2022/060019

(56) References cited:
- JP-A- 2013 084 525
- JP-A- 2017 182 962
- KR-A- 20190 037 149
- KR-A- 20190 068 066
- KR-B1- 101 654 042
- US-A1- 2020 295 347

## Description

### [Technical Field]

The present application claims the benefit of priorities based on Korean Patent Application No. 10-2020-0121526 filed on September 21, 2020, and Korean Patent Application No. 10-2021-0120228 filed on September 9, 2021.

The present invention relates to a positive electrode slurry for a lithium-sulfur battery, a method for preparing the same, and a positive electrode for a lithium-sulfur battery and a lithium-sulfur battery comprising the same.

### [Background]

As the utilization range of lithium secondary batteries is expanded not only to portable electronic devices and communication devices, but also to electric vehicles (EV) and electric storage systems (ESS), the demand for high capacity of lithium secondary batteries used as their power sources is increasing.

The lithium-sulfur battery among various lithium secondary batteries is a battery system using a sulfur-based material having a sulfur-sulfur bond as a positive electrode active material and using lithium metal, a carbon-based material in which intercalation/deintercalation of lithium ions occurs, or silicon or tin that forms an alloy with lithium as a negative electrode active material.

There is an advantage that sulfur, which is the main material of the positive electrode active material in the lithium-sulfur battery, has a low atomic weight, is very rich in resources and thus easy to supply and receive, and is cheap, non-toxic and environmentally friendly.

In addition, the lithium-sulfur battery has a theoretical discharging capacity of 1,675 mAh/g derived from a conversion reaction of lithium ion and sulfur (S₈+16Li⁺+16e⁻ → 8Li₂S) in the positive electrode, and if lithium metal (theoretical capacity: 3,860 mAh/g) is used as the negative electrode, the theoretical energy density is 2,600 Wh/kg. Since the energy density of the lithium-sulfur battery is much higher than the theoretical energy density of other battery systems currently under study (Ni-MH battery: 450Wh/kg, Li-FeS battery: 480 Wh/kg, Li-MnO₂ battery: 1,000Wh/kg, Na-S battery: 800 Wh/kg) and a lithiumion battery (250 Wh/kg), the lithium-sulfur battery is a battery that can meet the demands for economic efficiency and environment friendliness as well as for high performance of the battery, and is currently being actively researched.

A positive electrode for a lithium-sulfur battery is generally manufactured by applying a positive electrode slurry comprising a positive electrode active material, an electrically conductive material, a binder, and a solvent on a positive electrode current collector, drying it, and then press-molding it.

However, in the case of a lithium-sulfur battery, the physical properties of the positive electrode slurry are particularly important factors in the preparation of the positive electrode slurry, because it greatly affects the configuration of the positive electrode and the performance of the battery.

Accordingly, various techniques have been proposed for improving the physical properties of the positive electrode slurry in the lithium-sulfur battery.

As an example, Korean Patent Publication No. 2019-0085874 discloses that the dispersibility of a positive electrode slurry can be improved by incorporating a lower alcohol having 1 to 5 carbon atoms into the positive electrode slurry.

In addition, Korean Patent Publication No. 2017-0081840 discloses that the dispersibility and coating properties of a positive electrode slurry can be improved by preparing the positive electrode slurry through the step of preparing a pre-dispersion solution containing an electrically conductive material and a solvent, and mixing the pre-dispersion solution with an active material and a binder.

These patent publication inventions have improved the dispersibility, the rheological property and the like of the positive electrode slurry to some extent by changing the composition or preparation method of the positive electrode slurry, but the effect is not sufficient. In particular, when an additive is introduced to improve the physical properties of the positive electrode slurry, there is a problem that the performance of the lithium-sulfur battery is deteriorated. Therefore, there is a need for further development of a positive electrode slurry for a lithium-sulfur battery, which has excellent dispersibility and flowability even while having a high solid content.

### [Prior Art Documents]

### [Patent Documents]

Korean Patent Publication No. 2019-0085874 (2019.07.19), Slurry composition for forming cathode, cathode manufactured thereby, and battery comprising the same

Korean Patent Publication No. 2017-0081840 (2017.07.13), Preparation method of positive electrode slurry for lithium secondary battery

KR101654042B1 discloses a positive electrode slurry for a lithium secondary battery, comprising a positive electrode active material, a conductive material, a binder, and a solvent, wherein the phase angle measured at 1 Hz is between 50° and 70°.

KR20190037149A refers to a positive electrode slurry and discloses a method for predicting process efficiency of the slurry. It discloses that there is a correlation between the particle size distribution of the composite particles and the particle size distribution of the electrode active material. This is a factor influencing the viscosity change and/or gelation of the slurry. Other prior art documents are KR 10-2019-0068066A and US2020295347A1.

### [Disclosure]

### [Technical Problem]

Accordingly, as a result of conducting various studies to solve the above problems, the inventors of the present invention have found that when adjusting the ratio of the average particle diameter of a positive electrode active material and a positive electrode slurry and the phase angle of the positive electrode slurry, it is possible to improve the overall physical properties of the positive electrode slurry for the lithium-sulfur battery without changing the composition or preparation process of the positive electrode slurry, and thus have completed the present invention.

Therefore, it is an object of the present invention to provide a positive electrode slurry for a lithium-sulfur battery with improved flowability and processability even while having a high solid content.

In addition, it is another object of the present invention to provide a positive electrode for a lithium-sulfur battery prepared from the positive electrode slurry for the lithium-sulfur battery and a lithium-sulfur battery comprising the positive electrode for the lithium-sulfur battery.

### [Technical Solution]

The invention is defined in the independent claims. Preferred embodiments are as defined in the dependent claims.

In order to achieve the above objects, the present invention provides a positive electrode slurry for a lithium-sulfur battery, including: a positive electrode active material, an electrically conductive material, a binder and a solvent, wherein a ratio of an average particle diameter (D₅₀) of the positive electrode active material to an average particle diameter (D₅₀) of the positive electrode slurry is 1.5 or less, and a phase angle at 1 Hz of the positive electrode slurry is 50° or more.

In addition, the present invention provides a positive electrode for a lithium-sulfur battery comprising a positive electrode active material layer formed using the positive electrode slurry for the lithium-sulfur battery.

In addition, the present invention provides a lithium-sulfur battery comprising the above-described positive electrode; a negative electrode, a separator and an electrolyte.

In addition, the present invention provides a battery module including the above-described lithium-sulfur battery.

In addition, the present invention provides a device including the above-described lithium-sulfur battery.

### [Advantageous Effects]

The positive electrode slurry for the lithium-sulfur battery of the present invention exhibits excellent flowability even while having a high solid content, thereby making it possible to manufacture a positive electrode for a lithium-sulfur battery with excellent electrochemical properties and improving the productivity and economic feasibility of the manufacturing process of the positive electrode for the lithium-sulfur battery.

### [Detailed Description]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used in the present invention is for the purpose of describing particular embodiments only and is not intended to be limiting of the invention.

As used herein, the term "average particle diameter (D₅₀)" refers to the corresponding particle diameter when the cumulative volume percentage reaches 50% in the particle size distribution curve of the particle, and is measured using a laser diffraction method.

The term "composite" as used herein refers to a material that two or more materials are combined to express a more effective function while forming physically and chemically different phases to each other.

The lithium-sulfur battery has higher theoretical discharging capacity and theoretical energy density than other various secondary batteries, and is attracting attention as a next-generation secondary battery due to the advantage that sulfur, which is used as the main material of a positive electrode active material, is rich in resources and is cheap as well as environmentally friendly.

The performance of such a lithium-sulfur battery may vary depending on the characteristics of each element constituting the battery. Among them, the constitution of the electrode directly affects the performance of the battery. In particular, the solid concentration of the slurry constituting the positive electrode and the loading amount of the active material has a significant effect on the processability in the manufacture of the positive electrode and the properties of the positive electrode formed thereby.

In general, in the case of a positive electrode slurry for a lithium-sulfur battery, there were problems that the dispersibility of solids is low, and thus the surface condition of the positive electrode is deteriorated, for example, cracks generated or particles agglomerated on the surface of the positive electrode, and as the loading amount of the positive electrode active material is increased, these phenomena are further accelerated.

To solve these problems, in the prior art, a method of preparing a positive electrode slurry by adding an additive to the positive electrode slurry, dispersing some components to be contained in the positive electrode slurry individually and then mixing them, or injecting an excess of solvent has been proposed. However, in that case, there are limitations that additives such as polymer dispersants act as resistors in the battery and adversely affect the performance of the battery, and the solid concentration of the positive electrode slurry is reduced and thus it is difficult to load the active material into the positive electrode at a high loading amount, and there is a disadvantage that it is inefficient in terms of the manufacturing process.

Therefore, the present invention provides a positive electrode slurry for a lithium-sulfur battery with a high solid content and excellent flowability even without additional additives or changes in the manufacturing process by adjusting the ratio of the average particle diameter between the positive electrode active material and the positive electrode slurry to keep the phase angle of the positive electrode slurry within a certain range.

Specifically, the positive electrode slurry according to the present invention is for manufacturing a positive electrode for a lithium-sulfur battery, wherein the positive electrode slurry comprises a positive electrode active material, an electrically conductive material, a binder and a solvent, the ratio of the average particle diameter (D₅₀) of the positive electrode active material to the average particle diameter (D₅₀) of the positive electrode slurry is 1.5 or less, and the phase angle (δ) measured under the condition that the frequency of the positive electrode slurry is 1 Hz is 50° or more.

In the present invention, the average particle diameter of the positive electrode slurry means the particle size of the positive electrode slurry itself finally obtained by mixing the positive electrode active material, the electrically conductive material, and the binder in the solvent. In general, the average particle diameter of a positive electrode slurry may depend on the average particle diameter of the positive electrode active material contained therein. However, since the particle size of the positive electrode active material is changed by the mixing process for dispersion during the preparation process of the positive electrode slurry, the average particle diameter of the positive electrode slurry and the average particle diameter of the positive electrode active material are distinct from each other.

According to the present invention, the active surface of the positive electrode active material is relatively small by adjusting the ratio of the average particle diameter of the positive electrode active material to the positive electrode slurry below a certain range, thereby improving the dispersibility of the positive electrode active material, the electrically conductive material, and the binder, and this positive electrode active material is weakly combined with the binder to lower the elasticity of the positive electrode slurry while increasing the flowability corresponding to the viscosity, and thus the final solid content in the positive electrode slurry may be increased compared to the prior art. In addition, it is possible to improve flowability and thus improve processability by lowering the viscosity of the positive electrode slurry.

The positive electrode active materials may have an average particle diameter (D₅₀) of 28 to 60 µm, preferably 30 to 55 µm, and more preferably 30 to 50 µm.

The positive electrode slurry comprising the positive electrode active material, the electrically conductive material and the binder may have an average particle diameter (D₅₀) of 20 to 40 µm, preferably 25 to 40 µm, more preferably 25 to 35 µm.

The ratio of the average particle diameter (D₅₀) of the positive electrode active material to the average particle diameter (D₅₀) of the positive electrode slurry is 1.5 or less, preferably 0.1 to 1.5, more preferably 0.2 to 1.5, still more preferably 0.5 to 1.5, and most preferably 1.0 to 1.5. In the present invention, the ratio of the average particle diameter of the positive electrode active material to the average particle diameter of the positive electrode slurry corresponds to "average particle diameter of positive electrode active material/average particle diameter of positive electrode slurry." As the ratio of the average particle diameter of the positive electrode active material to the positive electrode slurry falls within the above-mentioned range, each component contained in the positive electrode slurry can be uniformly dispersed, and they are in a state of aggregation at a certain level, and the positive electrode slurry can have a liquid-like flow behavior.

The positive electrode slurry according to the present invention has a phase angle of 50° or more, preferably 50 to 70° at 1 Hz by having the ratio of the average particle diameter (D₅₀) of the positive electrode active material and the positive electrode slurry as described above. In the present invention, the phase angle is measured at a frequency of 1 Hz using a rheometer by a method known in the art. If the phase angle of the positive electrode slurry exceeds 70°, there is a risk that the slurry may flow down from the substrate during coating.

In addition, the positive electrode slurry of the present invention has a viscosity of 30 to 80 Pa·s, preferably 32 to 70 Pa·s, more preferably 35 to 60 Pa·s, still more preferably 40 to 60 Pa·s, most preferably 43 to 58 Pa·s when measured under conditions of 23 °C and a shear rate of 0.25 s⁻¹. If the viscosity of the positive electrode slurry is less than the above range, coating properties may be reduced. On the contrary, if the viscosity of the positive electrode slurry exceeds the above range, elasticity may be increased and the solid content may also be lowered.

As the ratio of the average particle diameter of the positive electrode active material to the positive electrode slurry is adjusted to fall within a certain range without changing the composition or preparation process of the positive electrode slurry, the positive electrode slurry according to the present invention can satisfy the condition of phase angle, thereby greatly improving cohesiveness and flowability while having a high solid content.

Hereinafter, each component contained in the positive electrode slurry according to the present invention will be described.

The positive electrode slurry according to the present invention is for a lithium-sulfur battery, and contains a sulfur-carbon composite as a positive electrode active material.

The sulfur-carbon composite comprises a porous carbon material and sulfur contained in at least a part of inner and outer surfaces of the porous carbon material. Sulfur used as the positive electrode active material in the lithium-sulfur battery is used in combination with an electrically conductive material such as a carbon material because it does not have electrical conductivity alone. Accordingly, sulfur is contained in the form of a sulfur-carbon composite.

The sulfur may comprise at least one selected from the group consisting of elemental sulfur (S₈) and a sulfur compound. The positive electrode active material may comprise at least one selected from the group consisting of inorganic sulfur, Li₂Sₙ (n≥1) , a disulfide compound, an organic sulfur compound and a carbon-sulfur polymer ((C₂Sₓ)ₙ, x=2.5 to 50, n≥2). Preferably, the positive electrode active material may be inorganic sulfur.

The sulfur-carbon composite comprises a porous carbon material not only to provide a framework capable of uniformly and stably immobilizing the sulfur but also to compensate for the low electrical conductivity of sulfur so that the electrochemical reaction can proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. If the average diameter of the pores is less than the above range, the pore size is only at the molecular level and thus impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); graphites such as natural graphite, artificial graphite, and expanded graphite, and activated carbon. Preferably, the porous carbon material may be carbon nanotubes.

Sulfur in the sulfur-carbon composite is located on at least one of the inner and outer surfaces of the aforementioned porous carbon material, and for example, may exist in an area of less than 100%, preferably 1 to 95%, more preferably 40 to 96% of the entire inner and outer surface of the porous carbon material. If sulfur as described above is present on the inner and outer surfaces of the porous carbon material within the above range, the maximum effect may be exhibited in terms of an electron transfer area and wettability with an electrolyte. Specifically, since sulfur is thinly and evenly impregnated on the inner and outer surfaces of the porous carbon material in the above range, the electron transfer contact area can be increased during the charging/discharging process. If sulfur is located in an area of 100% of the entire inner and outer surface of the porous carbon material, the porous carbon material is completely covered with sulfur, and thus since it has poor wettability to the electrolyte and poor contact and thus does not receive electrons, it cannot participate in the electrochemical reaction.

The sulfur-carbon composite may contain 65 to 90% by weight, preferably 70 to 85% by weight, more preferably 72 to 80% by weight of sulfur based on 100% by weight of the sulfur-carbon composite. If the content of the sulfur is less than the above range, as the content of the porous carbon material in the sulfur-carbon composite is relatively increased, the specific surface area is increased and thus the content of the binder is increased when the positive electrode is manufactured. The increase in the amount of the binder used may eventually increase the sheet resistance of the electrode, and thus may act as an insulator to prevent electron pass, thereby deteriorating the performance of the battery. On the contrary, if the content of sulfur exceeds the above range, sulfur not combined with the porous carbon material agglomerates between themselves or re-leaches to the surface of the porous carbon material, and thus becomes difficult to receive electrons and cannot participate in electrochemical reactions, resulting in loss of the capacity of the battery.

The preparation method of the sulfur-carbon composite is not particularly limited in the present invention, and a method commonly used in the art may be used. For example, a method of simply mixing sulfur and the porous carbon material and then heat-treating and thus complexing them may be used.

The positive electrode active material may further comprise at least one selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

The positive electrode slurry for a lithium-sulfur battery according to the present invention may comprise an electrically conductive material to impart electrical conductivity. The electrically conductive material is a material that electrically connects the electrolyte and the positive electrode active material to serve as a path for electrons to move from the current collector to the positive electrode active material, and it may be used without limitation as long as it has electrical conductivity.

For example, as the electrically conductive material, carbon blacks such as Super-P, Denka black, acetylene black, Ketjen black, channel black, furnace black, lamp black, and thermal black; carbon derivatives such as carbon nanotube, graphene and fullerene; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The positive electrode slurry for a lithium-sulfur battery according to the present invention may comprise a binder to provide an adhesive force to the positive electrode current collector. The binder maintains the positive electrode active materials in the positive electrode current collector and organically connects the positive electrode active materials to further increase the binding force therebetween, and any binder known in the art can be used as the binder.

For example, the binder may be fluororesin-based binders comprising polyvinylidene fluoride (PVdF) or polytetrafluoroethylene (PTFE); rubber-based binders comprising styrene butadiene rubber (SBR), acrylonitrilebutadiene rubber, and styrene-isoprene rubber; cellulosebased binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The positive electrode slurry for a lithium-sulfur battery according to the present invention may contain a solvent. The solvent may be a solvent that can uniformly disperse the above-described positive electrode active material, electrically conductive material, and binder, and can be easily dried.

For example, the solvent is an aqueous solvent and water is most preferable, and in this case, the water may be distilled water or deionized water. However, the present invention is not necessarily limited thereto, and if necessary, an organic solvent such as a lower alcohol that is easily miscible with water may be used together as the solvent. The lower alcohol may comprise methanol, ethanol, propanol, isopropanol and butanol, and preferably, these may be used as a mixture with water.

The method for preparing the positive electrode slurry for the lithium-sulfur battery according to the present invention is not particularly limited, and a method known by those skilled in the art or various methods modified therefrom can be used.

For example, the positive electrode slurry for lithium-sulfur battery may be prepared by mixing an electrically conductive material, a binder, and a solvent to prepare a mixture, then adding a positive electrode active material to the mixture and stirring it. At that time, it is desirable to adjust the average particle diameter of the positive electrode active material to be injected and the average particle diameter of the positive electrode slurry to be finally prepared so that the ratio of the average particle diameter (D₅₀) of the positive electrode active material and the positive electrode slurry satisfies the condition of 1.5 or less, as described above.

In particular, in the case of the preparation method of the positive electrode slurry for the lithium-sulfur battery according to the present invention, as a positive electrode active material with an adjusted average particle diameter is used as a raw material, it is possible to minimize the process energy until the average particle diameter of the positive electrode slurry to be finally prepared is reached, and thus there are beneficial advantages in terms of economic feasibility and efficiency of the process. Specifically, in the case of the conventional method, a process energy of 60 W or more was required to prepare a positive electrode slurry. However, in the case of the present invention, the average particle diameter of a positive electrode slurry can be sufficiently reached even with a process energy of 50 W or less, which is preferable.

The mixing or stirring may be performed using a conventional dispersing device. For example, it is possible to use a paste mixer, a shaker, a homogenizer, a paint shaker, an ultrasonic homogenizer, a bead mill, a roll mill, an apex mill, a vibration ball mill, and a dispersing device using a mixture thereof. Preferably, a bead mill or a vibrating ball mill may be used, and when a bead mill is used, zirconia beads may be used as a dispersion medium.

As the positive electrode slurry for lithium-sulfur battery thus prepared has 1.5 or less of a ratio of average particle diameter (D₅₀) of the positive electrode active material and the positive electrode slurry, and the phase angle at 1 Hz of the positive electrode slurry satisfies 50° or more, it has good cohesiveness and flowability with a high solid content and thus has the effect of greatly improving the electrochemical properties and manufacturing processability of the positive electrode.

In addition, the present invention provides a positive electrode for a lithium-sulfur battery comprising the positive electrode slurry for the lithium-sulfur battery.

The positive electrode comprises a positive electrode current collector and a positive electrode active material layer formed on at least one surface of the positive electrode current collector. At that time, the positive electrode active material layer comprises the positive electrode slurry for the lithium-sulfur battery of the present invention.

The positive electrode current collector supports the positive electrode active material and is not particularly limited as long as it has high conductivity without causing chemical change in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material layer is formed using the positive electrode slurry for the lithium-sulfur battery according to the present invention, which may comprise a positive electrode active material, an electrically conductive material, and a binder.

The specific details of the positive electrode active material, the electrically conductive material, and the binder are as described above.

A method of manufacturing the positive electrode is not particularly limited, and a method known by those skilled in the art or various methods modified therefrom may be used.

For example, the positive electrode may be manufactured by applying the positive electrode slurry for the lithium-sulfur battery of the present invention on at least one surface of the positive electrode current collector and thus forming a positive electrode active material layer.

The application method is not particularly limited in the present invention, and for example, methods such as doctor blade, die casting, comma coating, and screen printing may be mentioned. In addition, after molding on a separate substrate, a positive electrode slurry may be applied on the positive electrode current collector by pressing or lamination.

After the application, a drying process for removing the solvent may be performed. The drying process is carried out at a temperature and time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation or electron beam may be mentioned. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

Additionally, the density of the positive electrode active material layer in the positive electrode may be increased by pressing the current collector after drying. Methods, such as a mold press and a roll press, are mentioned as a press method.

In addition, the present invention provides a lithium-sulfur battery comprising the positive electrode for the lithium-sulfur battery.

The lithium-sulfur battery comprises a positive electrode; a negative electrode; and an electrolyte interposed therebetween, wherein the positive electrode comprises the positive electrode for the lithium-sulfur battery according to the present invention.

The positive electrode is as described above.

The negative electrode may comprise a negative electrode current collector, and a negative electrode active material layer coated on one or both surfaces of the negative electrode current collector. Alternatively, the negative electrode may be a lithium metal plate.

The negative electrode current collector is for supporting the negative electrode active material layer, and is as described in the positive electrode.

The negative electrode active material layer may comprise an electrically conductive material, a binder, etc. in addition to the negative electrode active material. At this time, the binder is as described above.

The electrically conductive material is a material that acts as a path, through which electrons are transferred from the current collector to the negative electrode active material, by electrically connecting the electrolyte and the negative electrode active material. The electrically conductive material can be used without limitation as long as it has electrical conductivity.

For example, as the electrically conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of forming the negative electrode active material is not particularly limited, and a method of forming a layer or film commonly used in the art may be used. For example, methods such as compression, coating, and deposition may be used. In addition, a case, in which a thin film of metallic lithium is formed on a metal plate by initial charging after assembling a battery without a lithium thin film on the current collector, is also comprised in the negative electrode of the present invention.

The electrolyte contains lithium ions, and is intended to cause an electrochemical oxidation or reduction reaction in the positive electrode and the negative electrode through them.

The electrolyte may be a non-aqueous electrolyte solution or a solid electrolyte that does not react with lithium metal, but is preferably a non-aqueous electrolyte, and comprises an electrolyte salt and an organic solvent.

The electrolytic salt which is comprised in the non-aqueous electrolyte solution is lithium salt. The lithium salt can be used without limitation as long as it is commonly used in an electrolyte solution for a lithium secondary battery. For example, the lithium salt may be LiCl, LiBr, LiI, LiClO₄, LiBF₄, LiB₁₀Cl₁₀, LiPF₆, LiCF₃SO₃, LiCF₃CO₂. LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate, tetraphenyl lithium borate, lithium imide, etc.

The concentration of the lithium salt may be determined in consideration of ion conductivity, solubility and the like, and may be, for example, 0.1 to 4.0 M, preferably 0.5 to 2.0 M. If the concentration of the lithium salt is less than the above range, it is difficult to ensure ion conductivity suitable for operating the battery. On the other hand, if the concentration exceeds the above range, the viscosity of the electrolyte solution is increased to lower the mobility of the lithium ion and the decomposition reaction of the lithium salt itself may increase to deteriorate the performance of the battery. Therefore, the concentration is adjusted appropriately within the above range.

As the organic solvent contained in the non-aqueous electrolyte solution, those conventionally used in an electrolyte solution for a lithium secondary battery may be used without limitation, and for example, ether, ester, amide, linear carbonate, cyclic carbonate, etc. may be used alone or in combination of two or more.

The ether-based compound may comprise acyclic ethers and cyclic ethers.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethylether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, polyethylene glycol methylethyl ether.

As an example, the cyclic ether may be, but is not limited to, at least one selected from the group consisting of 1,3-dioxolane, 4,5-dimethyl-dioxolane, 4,5-diethyldioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

Examples of the ester of the organic solvent may be, but is not limited to, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively be, but is not limited to, any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides comprise, but are not limited to, fluoroethylene carbonate (FEC) and the like.

The electrolyte may further comprise a nitric acid or nitrous acid-based compound as an additive in addition to the electrolyte salt and the organic solvent described above. The nitric acid or nitrite-based compound has an effect of forming a stable film on a lithium metal electrode, which is a negative electrode, and improving charging/discharging efficiency.

The nitric acid or nitrous acid-based compound is not particularly limited in the present invention, but may be at least one selected from the group consisting of inorganic nitric acid or nitrous acid-based compounds such as lithium nitrate (LiNO₃), potassium nitrate (KNO₃), cesium nitrate (CsNO₃), barium nitrate (Ba(NO₃)₂) ammonium nitrate (NH₄NO₃), lithium nitrite (LiNO₂), potassium nitrite (KNO₂), cesium nitrite (CsNO₂) and ammonium nitrite (NH₄NO₂); organic nitric acid or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably, lithium nitrate is used.

The injection of the electrolyte may be performed at an appropriate stage of the manufacturing processes of the electrochemical device, depending on the manufacturing process and required properties of the final product. That is, the injection can be performed before assembling the electrochemical device or at the final stage of assembling the electrochemical device.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium secondary battery. The separator may be an independent member such as a film, or may be a coating layer added to the positive and/or negative electrodes.

It is preferable that the separator has excellent wettability to the electrolyte while having low resistance to ion migration of the electrolyte.

The separator may be made of a porous substrate, and the porous substrate may be used as long as it is a porous substrate commonly used for a secondary battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 µm, preferably 5 to 50 µm. Although the thickness range of the porous substrate is not particularly limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, and may be 0.001 µm to 50 µm and 10 to 95%, respectively.

The lithium secondary battery according to the present invention can be manufactured by lamination, stacking, and folding processes of the separator and the electrodes, in addition to the usual winding process.

The shape of the lithium secondary battery is not particularly limited, and may be various shapes such as a cylindrical shape, a laminate shape, and a coin shape.

Also, the present invention provides a battery module including the lithium-sulfur battery described above as a unit battery.

The battery module may be used as a power source for medium to large-sized devices requiring high temperature stability, long cycle characteristics, high capacity characteristics, and the like.

Examples of such medium to large-sized devices may comprise, but is not limited to, a power tool powered and moved by an electric motor; an electric car including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; a power storage system, etc.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

### Example and Comparative Example

### [Example 1]

To a stainless slurry container with a volume of 500 ml, 5 wt.% of vapor grown carbon fiber (VGCF) as an electrically conductive material and 4 wt.% of styrene butadiene rubber/carboxymethyl cellulose (SBR/CMC) as a binder were added with water and zirconia beads, and mixed in a bead mill.

Thereafter, 91 wt.% of sulfur-carbon composite (S:CNT=70:30 (weight ratio)) having an average particle diameter (D₅₀) of 45.9 µm was added to the mixture and stirred at 48 W to prepare a positive electrode slurry having an average particle diameter (D₅₀) of 29.9 µm. At this time, the solid content of the prepared positive electrode slurry for the lithium-sulfur battery was 31%.

### [Example 2]

A positive electrode slurry for a lithium-sulfur battery was prepared in the same manner as in Example 1 above, except that a sulfur-carbon composite having an average particle diameter (D₅₀) of 34.2 µm was used as a positive electrode active material in the same amount, and stirred at 48 W to prepare a positive electrode slurry having an average particle diameter (D₅₀) of 29.5 µm. At this time, the solid content of the prepared positive electrode slurry for the lithium-sulfur battery was 31%.

### [Comparative Example 1]

A positive electrode slurry for a lithium-sulfur battery was prepared in the same manner as in Example 1 above, except that a sulfur-carbon composite having an average particle diameter (D₅₀) of 51.3 µm was used as a positive electrode active material in the same amount, and stirred at 60 W to prepare a positive electrode slurry having an average particle diameter (D₅₀) of 29.5 µm. At this time, the solid content of the prepared positive electrode slurry for the lithium-sulfur battery was 31%.

### Experimental Example 1. Evaluation of the physical properties of positive electrode slurry

### (1) Viscosity

Viscosity was measured for the positive electrode slurries in Examples and Comparative Example. Specifically, it was measured under conditions of 23 °C and 1 rpm using a rheometer (Discovery HR-1, TA instruments Korea). The results obtained at this time are shown in Table 1 below.

### (2) Phase angle

The phase angle was measured for the the positive electrode slurries in Examples and Comparative Example. Specifically, it was measured using a rheometer (Discovery HR-1, TA instruments Korea) while applying a stress of 0.08% at 23 °C and frequency-sweeping at a frequency of 1 Hz. The results obtained at this time are shown in Table 1 below.

**Table 1:**

| | Ratio of average particle diameter (D₅₀) of positive electrode active material and positive electrode slurry | viscosity (cPs@ 1 rpm) | Phase angle (°@ 1 Hz) |
|---|---|---|---|
| Example 1 | 1.5 | 55530 | 50 |
| Example 2 | 1.2 | 45160 | 52 |
| Comparative Example 1 | 1.7 | 59483 | 46 |

From Table 1, it can be seen that in the case of the the positive electrode slurries according to Examples, the overall physical properties of the slurries are excellent compared to the Comparative Example.

In general, it is evaluated that as the phase angle of the fluid is increased, the cohesiveness and flowability of the fluid are improved. Referring to Table 1, it can be seen that in the case of the a positive electrode slurries according to Examples 1 and 2, the phase values are larger than that of the positive electrode slurry according to Comparative Example 1, and thereby the cohesiveness and flowability are excellent.

In addition, it can be seen that the the positive electrode slurries of Examples 1 and 2 have a lower viscosity than Comparative Example 1, and thus they can exhibit excellent coating properties on the surface of the positive electrode current collector.

In addition, it can be confirmed from Example 2 and Comparative Example 1 that although the positive electrode slurry having the same average particle diameter was prepared, the viscosity and phase angle of the final prepared positive electrode slurry are different depending on the difference in the average particle diameter of the input positive electrode active material.

From these results, it can be confirmed that in the case of the positive electrode slurry according to the present invention, as the ratio of the average particle diameter (D₅₀) of the positive electrode active material and the positive electrode slurry corresponds to 1.5 or less, the cohesiveness, flowability and coating properties could be improved while having a high solid content.

## Claims

1. A positive electrode slurry for a lithium-sulfur battery, comprising:
a positive electrode active material;
an electrically conductive material;
a binder; and
a solvent,
wherein a ratio of an average particle diameter (D₅₀) of the positive electrode active material to an average particle diameter (D₅₀) of the positive electrode slurry is 1.5 or less measured using a laser diffraction method, and
wherein a phase angle at 1 Hz of the positive electrode slurry measured using a rheometer is 50° or more.

2. The positive electrode slurry for the lithium-sulfur battery according to claim 1, wherein the positive electrode active material has the average particle diameter (D₅₀) of 28 to 60 µm measured using a laser diffraction method.

3. The positive electrode slurry for the lithium-sulfur battery according to claim 1, wherein the positive electrode slurry has the average particle diameter (D₅₀) of 20 to 40 µm measured using a laser diffraction method.

4. The positive electrode slurry for the lithium-sulfur battery according to claim 1, wherein the ratio of the average particle diameter (D₅₀) of the positive electrode active material to the average particle diameter (D₅₀) of the positive electrode slurry measured using a laser diffraction method is 0.1 to 1.5.

5. The positive electrode slurry for the lithium-sulfur battery according to claim 1, wherein the positive electrode slurry has the phase angle of 50 to 70° measured under the condition of a frequency of 1 Hz measured using a rheometer.

6. The positive electrode slurry for the lithium-sulfur battery according to claim 1, wherein the positive electrode slurry has a viscosity of 30 to 80 Pa·s measured under conditions of 23°C and 1 rpm using a rheometer and a shear rate of 0.25 s⁻¹.

7. The positive electrode slurry for the lithium-sulfur battery according to claim 1, wherein the positive electrode active material comprises a sulfur-carbon composite.

8. The positive electrode slurry for the lithium-sulfur battery according to claim 7, wherein the sulfur-carbon composite comprises a porous carbon material, and sulfur present in at least a part of inner and outer surfaces of the porous carbon material.

9. The positive electrode slurry for the lithium-sulfur battery according to claim 8, wherein the porous carbon material comprises at least one selected from the group consisting of graphite, graphene, carbon black, carbon nanotubes, carbon fibers, and activated carbon.

10. The positive electrode slurry for the lithium-sulfur battery according to claim 8, wherein the sulfur comprises at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2).

11. A positive electrode for a lithium-sulfur battery comprising:
a positive electrode active material layer formed using the positive electrode slurry for the lithium-sulfur battery according to claim 1.

12. A lithium-sulfur battery comprising:
the positive electrode for the lithium-sulfur battery according to claim 11;
a negative electrode; and
an electrolyte.

13. A battery module comprising the lithium-sulfur battery according to claim 12.

14. A device comprising the lithium-sulfur battery according to claim 12.

15. The device of claim 14, wherein the device is selected from the group consisting of a power tool; an electric car; an electric motorcycle; an electric golf cart; and a power storage system.

## Patentansprüche

1. Positivelektrodenaufschlämmung für eine Lithium-Schwefel-Batterie, umfassend:
ein Positivelektrodenaktivmaterial;
ein elektrisch leitfähiges Material;
ein Bindemittel; und
ein Lösungsmittel,
wobei ein Verhältnis eines durchschnittlichen Partikeldurchmessers (D₅₀) des Positivelektrodenaktivmaterials zu einem durchschnittlichen Partikeldurchmesser (D₅₀) der Positivelektrodenaufschlämmung 1,5 oder weniger beträgt, gemessen unter Verwendung eines Laserbeugungsverfahrens, und
wobei ein Phasenwinkel bei 1 Hz der Positivelektrodenaufschlämmung, gemessen unter Verwendung eines Rheometers, 50° oder mehr beträgt.

2. Positivelektrodenaufschlämmung für die Lithium-Schwefel-Batterie nach Anspruch 1, wobei das Positivelektrodenaktivmaterial den durchschnittlichen Partikeldurchmesser (D₅₀) von 28 bis 60 µm aufweist, gemessen unter Verwendung eines Laserbeugungsverfahrens.

3. Positivelektrodenaufschlämmung für die Lithium-Schwefel-Batterie nach Anspruch 1, wobei die Positivelektrodenaufschlämmung den durchschnittlichen Partikeldurchmesser (D₅₀) von 20 bis 40 µm aufweist, gemessen unter Verwendung eines Laserbeugungsverfahrens.

4. Positivelektrodenaufschlämmung für die Lithium-Schwefel-Batterie nach Anspruch 1, wobei das Verhältnis des durchschnittlichen Partikeldurchmessers (D₅₀) des Positivelektrodenaktivmaterials zu dem durchschnittlichen Partikeldurchmesser (D₅₀) der Positivelektrodenaufschlämmung, gemessen unter Verwendung eines Laserbeugungsverfahrens, 0,1 bis 1,5 beträgt.

5. Positivelektrodenaufschlämmung für die Lithium-Schwefel-Batterie nach Anspruch 1, wobei die Positivelektrodenaufschlämmung den Phasenwinkel von 50 bis 70° aufweist, gemessen unter der Bedingung einer Frequenz von 1 Hz, gemessen unter Verwendung eines Rheometers.

6. Positivelektrodenaufschlämmung für die Lithium-Schwefel-Batterie nach Anspruch 1, wobei die Positivelektrodenaufschlämmung eine Viskosität von 30 bis 80 Pa·s aufweist, gemessen unter Bedingungen von 23°C und 1 U/min unter Verwendung eines Rheometers und einer Scherrate von 0,25 s⁻¹ .

7. Positivelektrodenaufschlämmung für die Lithium-Schwefel-Batterie nach Anspruch 1, wobei das Positivelektrodenaktivmaterial einen Schwefel-Kohlenstoff-Verbundstoff umfasst.

8. Positivelektrodenaufschlämmung für die Lithium-Schwefel-Batterie nach Anspruch 7, wobei der Schwefel-Kohlenstoff-Verbundstoff ein poröses Kohlenstoffmaterial und Schwefel umfasst, der in mindestens einem Teil der Innen- und Außenflächen des porösen Kohlenstoffmaterials vorhanden ist.

9. Positivelektrodenaufschlämmung für die Lithium-Schwefel-Batterie nach Anspruch 8, wobei das poröse Kohlenstoffmaterial mindestens eines umfasst, das aus der Gruppe ausgewählt ist, die aus Graphit, Graphen, Ruß, Kohlenstoffnanoröhren, Kohlenstofffasern und Aktivkohle besteht.

10. Positivelektrodenaufschlämmung für die Lithium-Schwefel-Batterie nach Anspruch 8, wobei der Schwefel mindestens eines umfasst, das aus der Gruppe ausgewählt ist, die aus anorganischem Schwefel, Li₂Sₙ(n≥1), einer Disulfidverbindung, einer organischen Schwefelverbindung und einem Kohlenstoff-Schwefel-Polymer ((C₂Sₓ)ₙ, x=2,5 bis 50, n≥2) besteht.

11. Positivelektrode für eine Lithium-Schwefel-Batterie, umfassend:
eine Positivelektrodenaktivmaterialschicht, die unter Verwendung der Positivelektrodenaufschlämmung für die Lithium-Schwefel-Batterie nach Anspruch 1 gebildet ist.

12. Lithium-Schwefel-Batterie, umfassend:
die Positivelektrode für die Lithium-Schwefel-Batterie nach Anspruch 11;
eine Negativelektrode; und
einen Elektrolyten.

13. Batteriemodul, umfassend die Lithium-Schwefel-Batterie nach Anspruch 12.

14. Vorrichtung, umfassend die Lithium-Schwefel-Batterie nach Anspruch 12.

15. Vorrichtung nach Anspruch 14, wobei die Vorrichtung aus der Gruppe ausgewählt ist, die aus einem Elektrowerkzeug, einem Elektroauto, einem Elektromotorrad, einem Elektrogolfwagen und einem Energiespeichersystem besteht.

## Revendications

1. Suspension d'électrode positive pour une batterie au lithium-soufre, comprenant :
un matériau actif d'électrode positive ;
un matériau électriquement conducteur ;
un liant ; et
un solvant,
dans laquelle un rapport d'un diamètre moyen de particule (D₅₀) du matériau actif d'électrode positive à un diamètre moyen de particule (D₅₀) de la suspension d'électrode positive est égal ou inférieur à 1,5, mesuré en utilisant un procédé de diffraction laser, et
dans laquelle un angle de phase à 1 Hz de la suspension d'électrode positive, mesuré en utilisant un rhéomètre est égal ou supérieur à 50°.

2. Suspension d'électrode positive pour la batterie au lithium-soufre selon la revendication 1, dans laquelle le matériau actif d'électrode positive a le diamètre moyen de particule (D₅₀) de 28 à 60 µm, mesuré en utilisant un procédé de diffraction laser.

3. Suspension d'électrode positive pour la batterie au lithium-soufre selon la revendication 1, dans laquelle la suspension d'électrode positive a le diamètre moyen de particule (D₅₀) de 20 à 40 µm, mesuré en utilisant un procédé de diffraction laser.

4. Suspension d'électrode positive pour la batterie au lithium-soufre selon la revendication 1, dans laquelle le rapport du diamètre moyen de particule (D₅₀) du matériau actif d'électrode positive au diamètre moyen de particule (D₅₀) de la suspension d'électrode positive, mesuré en utilisant un procédé de diffraction laser est 0,1 à 1,5.

5. Suspension d'électrode positive pour la batterie au lithium-soufre selon la revendication 1, dans laquelle la suspension d'électrode positive a l'angle de phase de 50 à 70°, mesuré sous la condition d'une fréquence de 1 Hz, mesuré en utilisant un rhéomètre.

6. Suspension d'électrode positive pour la batterie au lithium-soufre selon la revendication 1, dans laquelle la suspension d'électrode positive a une viscosité de 30 à 80 Pa·s, mesurée dans des conditions de 23°C et 1 tr/min en utilisant un rhéomètre et un taux de cisaillement de 0,25 s⁻¹.

7. Suspension d'électrode positive pour la batterie au lithium-soufre selon la revendication 1, dans laquelle le matériau actif d'électrode positive comprend un composite de soufre-carbone.

8. Suspension d'électrode positive pour la batterie au lithium-soufre selon la revendication 7, dans laquelle le composite de soufre-carbone comprend un matériau de carbone poreux, et du soufre présent dans au moins une partie des surfaces intérieure et extérieure du matériau de carbone poreux.

9. Suspension d'électrode positive pour la batterie au lithium-soufre selon la revendication 8, dans laquelle le matériau de carbone poreux comprend au moins un élément sélectionné dans le groupe constitué de graphite, graphène, noir de carbone, nanotubes de carbone, fibres de carbone et charbon actif.

10. Suspension d'électrode positive pour la batterie au lithium-soufre selon la revendication 8, dans laquelle le soufre comprend au moins un élément sélectionné dans le groupe constitué d'un soufre inorganique, Li₂Sₙ(n≥1), un composé de disulfure, un composé de soufre organique et un polymère de carbonesoufre ((C₂Sₓ)ₙ, x=2,5 à 50, n≥2).

11. Suspension d'électrode positive pour une batterie au lithium-soufre comprenant :
une couche de matériau actif d'électrode positive formée en utilisant la suspension d'électrode positive pour la batterie au lithium-soufre selon la revendication 1.

12. Batterie au lithium-soufre comprenant :
l'électrode positive pour la batterie au lithium-soufre selon la revendication 11 ;
une électrode négative ; et
un électrolyte.

13. Module de batterie comprenant la batterie au lithium-soufre selon la revendication 12.

14. Dispositif comprenant la batterie au lithium-soufre selon la revendication 12.

15. Dispositif selon la revendication 14, dans laquelle le dispositif est sélectionné dans le groupe constitué d'un outil électrique ; une voiture électrique ; une moto électrique ; un voiturette de golf électrique ; et un système de stockage d'énergie.
